# EUROPEAN PATENT SPECIFICATION

(11) **EP 0 887 381 B1**
(45) Date of publication and mention of the grant of the patent: **09.11.2005**
(21) Application number: 98660063.3
(22) Date of filing: 24.06.1998
(51) Int. Cl.: C08L 23/16, C08F 10/06, C08F 2/00, B01J 8/26, B01J 19/24

(54) **Process for preparing propylene polymers and impact modified polymers**
Verfahren zur Herstellung von Propylen Polymeren und schlagzäh modifizierten Polymeren
Procédé de préparation d' homopolymères de propylène et de polymères modifiés résistant aux chocs

(30) Priority: 24.06.1997 FI 972728
(43) Date of publication of application: 30.12.1998
(73) Proprietor: Borealis Technology Oy, 06101 Porvoo (FI)
(72) Inventor: Harlin, Ali, 01450 Vantaa (FI); Alastalo, Kauno, 06400 Porvoo (FI); Kivelä, Jouni, 00550 Helsinki (FI); Korhonen, Esa, 06400 Porvoo (FI)
(74) Representative: Sundman, Patrik Christoffer

(56) References cited:
- EP-A- 0 517 183
- WO-A-88/02376
- WO-A-96/18662
- WO-A-97/03124
- US-A- 4 740 550
- US-A- 4 740 551

## Description

### Background of the Invention

### Field of the Invention

The present invention relates to the production of homopolymers and impact modified polymers of propylene. In particular, the present invention concerns a process for preparing propylene polymers in a reactor system comprising a combination of at least one slurry reactor and at least one gas phase reactor.

### Description of Related Art

Impact resistance of propylene-based polymers can be increased by copolymerizing propylene with other olefins, such as ethylene, 1-butylene and the like. Both bulk and gas phase processes have been employed. In order to draw benefits from the different advantages of the slurry bulk and the gas phase reactors, respectively, combinations of bulk and gas phase reactors for preparing copolymers of propylene have also been suggested in the art. However, to date, none of the prior art processes meets the requirements for flexibility and low production costs dictated by the production of large varieties of polyolefin qualities using one and the same process configuration. In particular, recycling of rather large amounts of unreacted monomers to the slurry reactor, which is a typical feature of the known processes, impairs the loop reactor dynamics and slows up the transition to novel product qualities.

An improved two-stage process for polymerization of propylene in a combination of a loop reactor and a gas phase reactor is disclosed in US Patent No. 4,740,550. The main object of US 4,740,550 is to provide a process for preparing an impact modified block copolymer of high quality by feeding homopolymer with narrow residence time distribution to a block copolymerization stage. The process disclosed comprises the following stages: a first stage consisting of homopolymerization in a bulk loop reactor, a second stage homopolymerization in a gas phase reactor, fines removal in a cyclone between the first and second stage, and, finally, impact copolymerization in an additional gas phase reactor.

Before the polymerization product of the loop reactor is fed into the gas phase the fines fraction is removed and circulated back to the loop reactor. Together with the fines a part of the monomers from the gas phase reactor is recycled directly to the first stage loop reactor.

In the process disclosed in US Patent No. 4,740,550 an excess amount of propylene is circulated back to the first stage. As a consequence of this, the composition of the reaction medium cannot be much different in the two reactors, and the below described novel products cannot be produced in the prior art process.

There are some further considerable problems related to the above-mentioned prior art. Thus, if all fines are removed from the reactor outlet of the loop reactor and circulated back to the loop reactor, there is a considerable risk that the loop reactor eventually will be filled with inactive catalyst or slightly polymerized dead fines. On the other hand, if a portion of the fines stream would be combined with the product from the last reactor this might cause inhomogenity problems in the final product. Further, if a portion of the fines stream is separately collected and blended with a separate homopolymer as also suggested in US 4,740,550, this leads to complicated and economically unacceptable operation.

### Summary of the Invention

It is an object of the present invention to eliminate the problems related to the prior art of multiple-reactor processes and to provide a novel process for preparing polymers of propylene.

It is another object of the invention to provide a highly versitile process which can be used for preparing a wide range of homopolymers and impact modified polymers of propylene.

It is a third object of the invention to provide an apparatus for producing impact modified propylene polymers.

These and other objects, together with the advantages thereof over known processes, which shall become apparent from specification which follows, are accomplished by the invention as hereinafter described and claimed.

The process according to the present invention is based on a combination of at least one loop reactor and a first gas phase reactor and a second gas phase reactor connected in series, in that order, to form a cascade. The apparatus further includes a first conduit interconnecting at least one slurry reactor with at least one gas phase reactor for conducting essentially all of the unreacted monomers from the slurry reactor to the gas phase reactor, a second conduit interconnecting said first and said second gas phase reactors, and means for feeding propylene to said slurry reactor for feeding comonomer to said second gas phase reactor. The first and second gas phase reactors are separated by means for gas removal from polymer between the reactors.

Propylene polymers are prepared in the presence of a catalyst at an elevated temperature of at least 80°C and a pressure of 30-200 bar. According to the invention, the polymerization product of at least one slurry reactor, containing unreacted monomers, is conducted to the first gas phase reactor with a minimum or no recycling of monomer back to the slurry reactor. In connection with the present invention it has been found that impact copolymers of high quality can be produced with a two-stage homopolymerization followed by a impact copolymerization step without any fines removal and circulation either after the first or second stage homopolymerization. In the present invention, it is possible to minimize the amount of circulation by using the specific sequence of reactors and by selecting the relative amounts produced in each reactor with that object in mind. The production rate of the loop reactor is 10 to <50 wt-% of the total production rate.

According to another aspect of the invention, at least one slurry reactor and at least one gas phase reactor connected in series are employed as a reactor system, the at least one slurry reactor being a bulk loop reactor operated at high or super critical temperature, and the content of the slurry reactor, including the copolymer product and reaction medium containing unreacted monomers, is led directly into the gas phase reactor fluidized bed using a conduit interconnecting the slurry reactor and the gas phase reactor.

More specifically, the process according to the present invention is mainly characterized by what is stated in the characterizing part of claim 1.

The apparatus according to the present invention is characterized by what is stated in the characterizing part of claim 25.

The invention achieves a number of considerable advantages. With the present arrangement it has been found that the monomers fed into the first reactor can, to a large extent or fully, be consumed in the gas phase reactor(s) after the slurry reactor. This is possible due to gas phase operation with small amount of gas leaving with the polymer product. The loop reactor dynamics in the cascade provides fast transitions and high productivity. Fast start-ups are also possible because the gas phase bed material is available directly from the loop reactor. With the loop and gas phase reactor cascade it is possible to produce a large variety of different broad molecular weight distribution or bimodal products. The at least one gas phase reactor provides high flexibility in the reaction rate ratio between the first and second part of the product because of adjustable bed level and reaction rate. Further, the gas phase reactor having no solubility limitations makes it pssible to produce polymers of high and very high comonomer content.

The loop-gas phase reactor combination have greatly reduced residence times and production losses in comparison to gas phase - gas phase multireactor processes.

### Brief Description of the Drawings

Figure 1 depicts in a schematic fashion the process configuration of a first preferred embodiment of the invention; and
Figure 2 depicts in a schematic fashion the process configuration of a second preferred embodiment of the invention.

### Detailed Description of the Invention

### Definitions

For the purpose of the present invention, "the slurry reactor, which is used, is a loop reactor, operating in bulk or slurry and in which the polymer forms in particulate form. "Bulk" means a polymerization in reaction medium that comprises at least 60 wt-% monomer. According to a preferred embodiment the slurry reactor comprises a bulk loop reactor.

By "gas phase reactor" is meant any mechanically mixed or fluid bed reactor. Preferably the gas phase reactor comprises a mechanically agitated fluid bed reactor with gas velocities of at least 0.2 m/sec.

"High temperature polymerization" stands for polymerization temperatures above a limiting temperature of 80 °C known to be harmful for high yield catalysts of related prior art. At high temperatures the stereospecificity of the catalyst and the morphology of the polymer powder can be lost. This does not take place with the particularly preferred type of catalysts used in the invention which is described below. The high temperature polymerization takes place above the limiting temperature and below the corresponding critical temperature of the reaction medium.

"Super critical polymerization" designates polymerization that takes place above a corresponding critical temperature and pressure of the reaction medium.

By "direct feed" is meant a process in which the content of a slurry reactor, comprising the polymerization product and the reaction medium, is lead directly to the fluidized bed of a gas phase reactor.

"Reaction zone " stands for one or several reactors of similar type producing the same type or characteristics of polymer connected in the series.

### The overall process

The present invention concerns a multistage process consisting of a bulk reaction zone including at least one slurry reactor, and a gas phase reaction zone including at least one gas phase reactor in cascade after at least one slurry reactor with a minimum or no recycling of monomer back to the first reactor and with direct feed to the gas phase for homo- or copolymerizing propylene.

In the process, the content of the slurry reactor, the polymerization product and reaction medium, is conducted directly to the fluidized bed reactor. The product outlet from the slurry reactor can be discontinuous, or preferably continuous. The slurry is led as such without separation of any gases or particle streams based on different particle size. No particles are retured to the preceding reactor. Optionally, the line between the slurry reactor and the gas phase reactor can be heated in order to evaporate only a part or all of the reaction medium before it enters the gas phase reactor polymer bed.

The reaction is continued in the gas phase reactor(s). All or practically all (at least about 70 wt-% or even at least 90 wt-%) of the monomer entering the gas phase from the slurry reactor is part of the reactor gas inventory until it is converted into the polymer.

In two reactor operation the polymer leaving the gas phase reactor with the outlet system enters a solid/gas separation unit. The polymer from the bottom is fed to further processing steps and the gas is compressed and circulated back to the gas phase reactor after purification steps. Typically light inerts, such as methane and ethane, and heavier inerts such as propane and oligomers are removed in these purification steps. The purification be performed with distillation or membrane separation. In case of distillation the monomers are circulated back to the gas phase reactor mainly as liquid.

In three reactor operation the polymer leaving the 1 st gas phase reactor with the outlet system enters a solid/gas separation unit. The polymer from the bottom is fed further to 2nd gas phase reactor and the gas is compressed and circulated back to the 1st gas phase reactor after purification steps. Typically light inerts, such as methane and ethane, and heavier inerts such as propane and oligomers are removed in these purification steps. The purification can be performed with distillation or membrane separation. In case of distillation the monomers are circulated back to the gas phase reactor mainly as liquid.

Optionally in three reactor operation the polymer leaving the 1st gas phase reactor with the outlet system enters the 2nd gas phase reactor directly with the accompanying gas.

In three reactor operation the polymer leaving the 2nd gas phase reactor with the outlet system enters a solid/gas separation unit. The polymer from the bottom is fed to further processing steps and the gas is compressed and partly circulated back to the 2nd gas phase reactor directly, partly after purification steps. Typically light inerts, such as methane and ethane, and heavier inerts such as propane and oligomers are removed in these purification steps. The purification can be performed with distillation or membrane separation. In case of distillation an ethylene rich stream is circulated back to the 2nd gas phase reactor and a propylene-propane stream is fed to propane and oligomers removal steps.

The polymerization products are obtained by using a catalyst. The catalyst can be any catalyst providing adequate activity at elevated temperature. The preferred catalyst system used comprises a high yield Ziegler-Natta catalyst having catalyst component, a co-catalyst component, an external donor and, optionally, an internal donor. Another preferred catalyst system is a metallocene-based catalyst, e.g. having a bridged ligand structure giving high stereoselectivity, and which is impregnated on a carrier or support in the form of an activated complex.

The polymerization temperature for homopolymers is at least 80 °C and for copolymers at least 65 °C. The loop reactor is operated at elevated pressure at least 35 bar up to 100 bar, and the gas phase reactor(s) at least 10 bar up to dew point pressure. Alternatively any reactor of the reactors in the series can be operated above the critical pressure and temperature (of the reaction medium), but preferably below the softening temperature of the polymer.

Propylene and optionally one or more other C₂ to C₁₆ olefins, e.g. ethylene, 1-butene, 4-methyl-1-pentene, 3-methyl-1-butene, 1-hexene, 1-octene, 1-decene, dienes, or cyclic olefins, e.g. vinylcyclohexane or cyclopentene, in particular ethylene, is subjected to polymerization and copolymerization, respectively, in a plurality of polymerization reactors connected in series. The comonomer olefin(s) is preferably used in the second (and third, fourth ...) gas phase reactor to provide an elastomer. Different amounts of hydrogen can be used as a molar mass modifier or regulator in any or every reactor.

In order to provide an impact modified product, a rubbery copolymer (elastomer) is preferably provided in one or several of the second to fourth gas phase reactor(s). The proportion of the elastomer is about 5 to 40 % by weight of the polypropylene.

The desired homo- and impact modified copolymers of propylene can be recovered from the product separation means of the gas phase reaction zone.

### The catalyst

The polymerization products are obtained by using a catalyst. As catalyst any stereospecific catalyst for propylene can be used, which has high yield and useful polymer properties e.g. isotacticity and morphology at the high temperature and possible supercritical polymerization. The preferred catalyst system used comprises a high yield Ziegler-Natta catalyst having catalyst component, a cocatalyst component, optionally, an external donor and an internal donor. Another preferred catalyst system is a metallocene catalyst having a bridged ligand structure giving high stereoselectivity, and which has an active complex impregnated on a carrier. Finally, the catalyst is preferably any other catalyst providing adequate activity at elevated temperature.

Examples of suitable systems are described in, for example, US Patent 5,234,879, EP 627 449, WO 92/19653, WO 92/19658 and WO 92/19659.

One particularly preferable catalyst, which can be used in the present invention, is disclosed in WO 92/19653. Another preferred catalyst is disclosed in WO 98/12234.

Further preferred catalysts are disclosed in WO 97/36938 and WO 97/36939.

### Prepolymerization

The catalyst can be prepolymerized prior to feeding into the first polymerization reactor of the series. During prepolymerization the catalyst components are contacted with a monomer, such as an olefin monomer, before feeding into the reactor. Examples of suitable systems are described in, for example, WO 97/33920.

It is also possible to carry out the prepolymerization in the presence of a viscous substance, such as an olefinic wax, to provide a prepolymerized catalyst which is stabile during storage and handling. The catalyst prepolymerized in wax will allow for easy dosing of the catalyst into the polymerization reactors. Examples of suitable systems are described in, for example, EP 607 703. Typically about 1 part of catalyst is used for a maximum of 4 parts of polymer.

The monomer used for prepolymerization can be selected from the group consisting of propylene, 1-butene, 4-methyl-1-pentene, 3-methyl-1-butene, vinylcyclohexane, cyclopentene, 1-hexene, 1-octene, and 1-decene.

The prepolymerization can be performed batchwise in wax or in a continuous prepolymerization reactor or in a continuous plug flow type prepolymerization reactor.

### Polymerization

The invention is based on the combination of at least one slurry reactor and at least one gas phase reactor connected in series, called a cascade.

The equipment of the polymerization step can comprise polymerization reactors of any suitable type. The slurry reactor can be any continuous or simple stirred tank reactor or loop reactor operating in bulk or slurry and the polymer forms in particular form in the reactor. Bulk means a polymerization in reaction medium that comprises of at least 60 % (w/w) monomer. The gas phase reactor can be any mechanically mixed or fluid bed reactor. According to the present invention the slurry reactor is preferably a bulk loop reactor and the gas phase reactor is a fluidized bed type reactor optionally equipped with a mechanical stirrer.

Any bulk or slurry reactor in the process can be a super critical polymerization reactor.

The production split between the slurry reactor and the 1st gas phase reactor(s) is 65:35-50:50 when monomer recycling back to the slurry reactor is allowed. In contrast, the production split between the slurry reactor and the gas phase reactor(s) is less than or equal to 50:50 when no recycling back to the slurry reactor is required. In all the cases the production split is more than 10:90. Thus, according to a preferred embodiment, 10 to (less than) 50 % of the polymer is prepared in the slurry reaction zone and no monomer is recycled. When 50 % to 65 % of the polymer is prepared in the slurry reactor zone, a small monomer amount of the monomer has to be recycled to the slurry reactor from the gas phase reaction zone.

According to the invention, the polymerization process comprises at least the following steps of
· subjecting propylene and optionally other olefins to polymerization or copolymerization in a first slurry polymerization zone or reactor,
· recovering the first polymerization product from the first reaction zone with the reaction medium,
· directly or indirecly feeding the first polymerization product into a gas phase polymerization zone or reactor,
· optionally feeding additional propylene and/or comonomer(s) to the second reaction zone,
· subjecting the excess propylene and/or comonomers from 1st zone and additional propylene and/or comonomer(s) to a second polymerization reaction in the presence of the first polymerization product to produce a second polymerization product,
· recovering the polymerization product from second reaction zone, and
· separating and recovering the polypropylene from the second reaction product.

Additionally the process can also comprise one or more of the following additional steps
· prepolymerizing catalyst with one or more monomer(s),
· separating gas from the second reaction zone product,
· feeding the recovered polymerization product of the earlier zones to a third or fourth reaction zone or reactor,
· optionally feeding additional propylene and/or comonomer(s) to the third and fourth reaction zone,
· subjecting the excess propylene and/or comonomer(s) and additional propylene and/or comonomers to third and fourth polymerization reaction in the presence of the polymerization product of the earlier zones to produce a third or fourth polymerization product, and
· recovering the polymerization product from the third or fourth reaction zone, and
· separating and recovering the polypropylene from the third or fourth reaction product.

In the first step of the process, propylene with the optional comonomer(s) together with the activated catalyst complex and optional cocatalyst and other aid components are fed into the first polymerization reactor. The catalyst can be prepolymerized or it is prepolymerized before feeding to the process. Along with the afore-mentioned components hydrogen as a molar mass regulator can be fed into the reactor in the amount required for achieving the desired molar mass of the polymer. In the embodiment of no circulation back to the slurry reactor only fresh monomer is fed into the first reactor.

Alternatively, in the embodiment of minimum recycling of the monomer back to the slurry reactor, the feed of the reactor can consist of the recycled monomer from the following reactor(s) passed through a recovery system, if any, together with added fresh monomer, hydrogen, optional comonomer(s) and catalyst components.

In all of the embodiments the presence of propylene, optional comonomer(s), cocatalyst and other aid components, the activated catalyst complex will polymerize and form a product in particulate form in the slurry reactor, i.e. polymer particles, which are suspended in the fluid circulated in the reactor.

The polymerization medium typically comprises the monomer and optionally a hydrocarbon, and the fluid is either liquid or gaseous. In the case of slurry reactor, in particular a loop reactor, the fluid is liquid and the suspension of polymer is circulated continuously through the slurry reactor, whereby more suspension of polymer in particle form in hydrocarbon medium or monomer will be produced. According to preferred embodiment, the first polymerization or copolymerization reaction is carried out in a reaction medium mainly consisting propylene. Preferably at least 60 weight percent of the medium is propylene.

The conditions of the slurry reactor are selected so that at least 10 wt-%, preferably at least 12 wt-% of the whole production is polymerised in the first slurry reactor. The temperature is in the range of 40 to 110 °C, preferably 50 to 100 °C, and even more preferably for homopolymers and high randomness copolymer 80 to 100 °C and for copolymers of high comonomer content 60 to 75 °C. The reaction pressure is in the range of 30 to 100 bar, preferably 35 to 80 bar based on the vapour pressure of the reaction medium.

In slurry polymerization zone more than one reactor can be used in series. In such a case the polymer suspension in an inert hydrocarbon or in monomer produced in the 1st slurry reactor is fed without separation of inert components and monomers periodically or continuously to the following slurry reactor, which acts at lower pressure than the previous slurry reactor.

The polymerization heat is removed by cooling the reactor with a cooling jacket. The residence time in the slurry reactor must be at lest 10 minutes, preferably 20-100 min for obtaining a sufficient degree of polymerization. This is necessary to achieve polymer yields of at least 40 kg PP/g cat. It is also advantageous to operate the slurry reactor with high solid concentrations, e.g. 50 % for homopolymers and 35 or 40 % for some copolymers when the particles are swelling. If the solid concentration in the loop reactor is too low, the amount of reaction medium conducted to the second reaction zone or gas phase reactor is increasing.

The content of the slurry reactor, the polymerization product and reaction medium, is led directly to the gas phase reactor fluidized bed.

The second reactor is preferably a gas phase reactor, wherein propylene and optionally comonomer(s) are polymerized in reaction medium which consists of gas or vapour.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, e.g. monomer on such flow rate (at least 0.2 m/s) which make the particles act as a fluid. The fluidizing gas can contain also inert gases, like nitrogen and also hydrogen as a modifier. In the invention it is not recommendable to use unnecessary inert gases, which may cause problmes in the recovery section.

The gas phase reactor used can be operated in the temperature range of 50 to 115 °C, preferably between 60 and 110 °C and reaction pressure between 10 and 40 bar and the partial pressure of the monomer is preferably between 2 and 30 bar or more, but always below the dew point pressure.

According to one preferred embodiment, no fresh propylene is fed to the first gas phase reactor other than what is required for various flushings.

The pressure of the second polymerization product including the gaseous reaction medium is then reduced after the first gas phase reactor in order to separate part of the gaseous and possible volatile components (e.g. heavy comonomers and compounds used for catalyst feeds) of the product e.g. in a flash tank. The overhead gas stream is recirculated through the recovery system back to the first gas phase reactor or partly to the first gas phase reactor and partly to the slurry reactor. Some of the monomers, typically the heavier comonomers, can be recycled to the bulk reaction zone.

In the second reactor there can be produced 30 % or more, preferably 40 % or more, or even more preferably 50 % or the production.

If desired, the polymerization product can be fed into a second gas phase reactor in which a rubbery copolymer is provided by a third (co)polymerization reaction to produce a modified polymerization product. This third polymerization reaction will give the polymerization product properties of e.g. improved impact strength. The step of providing an elastomer can be perfomed in various ways. Thus, preferably an elastomer is produced by copolymerizing at least propylene and ethylene into an elastomer. The conditions for the copolymerization are within the limits of conventional EPM production conditions such as tehy are disclosed, e.g., in Encyclopedia of Polymer Science and Engineering, Second Edition, Vol. 6, p.545-558. A rubbery product is formed if the ethylene repeating unit content in the polymer lies within a certain range. Thus, preferably, ethylene and propylene are copolymerized into an elastomer in such a ratio that the copolymer contains from 10 to 70 % by weight of ethylene units. In particular, the ethylene unit content is from 30 to 50 % by weight of the copolymer propylene/ethylene elastomer. In other words, ethylene and propylene are copolymerized into an elastomer in a molar ratio of ethylene-to-propylene of 30/70 to 50/50.

The elastomer can also be provided by adding a ready-made or natural elastomer to the polymer product of the first gas phase reactor.

The impact modified polypropylene typically contains about 5 to 50 wt-%, in particular about 10 to 45 wt-% and preferably about 15 to 40 wt-% of an elastomer described above.

Typically, the hydrogen concentration of the second reaction product is reduced before the product is fed into the second gas phase in order to enable production of higher molar mass for achieving improved impact properties.

It is further possible to transfer the product of the second gas phase reaction to a third (fourth etc.) polymerization reaction zone, wherein copolymerization is carried out in the presence of comonomers which give the third polymerization product properties e.g. improved stiffness impact balance or stress whitening or white blush properties.

The third and fourth gas phase reactor can be operated at temperatures in the range of 60 to 80 °C, and the reaction pressure can be kept at 10 to 30 bar.

Summarising what has been stated above, one particularly preferred embodiments of the invention comprises the following steps of:
- polymerizing propylene in a loop reactor at a pressure of 40 to 80 bar, at a temperature of 80 to 100 °C and hydrogen is used to control the molar mass of the polymerization product,
- recovering the polymerization product from the loop reactor and conducting it to a gas phase reactor fluid bed,
- optionally feeding additional propylene and optional comonomer to the gas phase reactor,
- optionally feeding additional hydrogen to the gas phase reactor to control the hydrogen-to-propylene ratio to provide the desired molecular mass of the polymerization product,
- recovering the polymerization product from the gas phase reactor and conducting it to a flash tank, wherein the pressure of the product is reduced to produce an overhead product containing essentially non-reacted propylene and hydrogen a bottom product primarily containing polymerized solids,
- recycling the overhead product or at least a major part thereof to the gas phase reactor, and
- recovering polypropylene polymer as the bottom product of the flash tank.

According to a second particularly preferred embodiment:
- propylene is polymerised in a loop reactor at a pressure of 40 to 80 bar, at a temperature of 60 or 80 to 100 °C and hydrogen is used to provide a polymerization product having the desired molar mass,
- the polymerization product from the loop reactor is recovered and conducted to a gas phase reactor fluid bed,
- optionally additional propylene and optional comonomer is fed to the gas phase reactor,
- additional hydrogen is optionally fed to the gas phase reactor to control the hydrogen-to-propylene ratio to provide desired molecular mass of the polymerization product,
- the polymerization product from the first gas phase reactor is recovered and conducted to an intermediate flash tank, wherein the pressure of the product is reduced to produce an overhead product containing essentially non-reacted monomer(s) and hydrogen and a bottom product primarily containing polymerised solids,
- the overhead product or at least a major part of it is recycled to the first gas phase reactor via a recovery section,
- the polypropylene polymer from the bottom of the intermediate flash tank is fed to a third polymerization reaction via a polymer feed system,
- the third polymerization reaction is carried out in a gas phase reactor in the presence of comonomers,
- the polymerization product from the second gas phase reactor is recovered and conducted to a flash tank, wherein the pressure of the product is reduced to produce an overhead product containing essentially non-reacted monomer(s) and hydrogen and a bottom product containing primarily polymerised solids,
- optionally the polymerization product from the third polymerization can be conducted directly or via a flash tank to a third (fourth etc.) gas phase polymerization reactor, wherein polymerization is carried out in the presence of comonomers.

These above-mentioned two preferred embodiments are also depicted in the attached drawings, which illustrate the particular configuration of process equipment used. The numerals refer to the following pieces of equipment:
- 1; 101: prepolymerization reactor
- 30; 130: catalyst reservoir
- 31; 131: feeding device
- 32; 132: diluent (optional)
- 33; 133: catalyst/diluent mixture
- 34; 134: monomer
- 35; 135: cocatalyst and possible donors
- 40; 140: loop reactor
- 42; 142: diluent feed (optional)
- 43; 143: monomer feed
- 44; 144: hydrogen feed
- 45; 145: comonomer feed (optional)
- 46; 146: back to the loop reactor 40; 140 through the line 46; 146
- 47; 147: one or several exhaust valve
- 150b: flash separator
- 152b: removing line
- 60; 160; 160b: gas phase reactor
- 61; 161; 161b: gas transfer line
- 62; 162; 162b: compressor
- 63; 163; 163b: monomer feed
- 64; 164; 164b: comonomer feed
- 65; 165; 165b: xhydrogen feed
- 66; 166; 166b: transfer line
- 67; 167: product transfer line
- 68; 168: polymer product recovery system, e.g. flash tank
- 69; 169: recovery line
- 70; 170: monomer recovery system

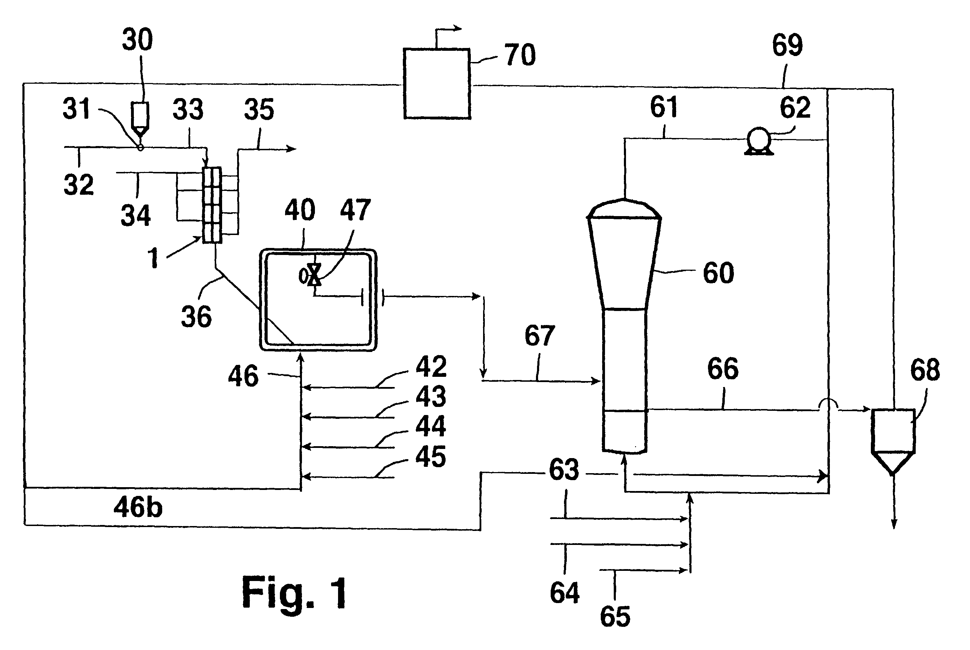

Turning to figure 1, it can be noted that catalyst from reservoir 30 is fed to the feeding device 31 together with optional diluent from line 32. The feeding device 31 feeds the catalyst/diluent mixture into the prepolymerization chamber 1 via line 33. Monomer is fed through 34 and cocatalyst and possible donors can be fed into the reactor 1 through conduits 35 or, preferably, the cocatalyst and donor(s) are intermixed and fed in line 35.

From the prepolymerization chamber 1 the prepolymerized catalyst is removed preferably directly through line 36 and transferred to a loop reactor 40. In the loop reactor 40 the polymerization is continued by adding an optional diluent from the line 42, monomer from line 43, hydrogen from line 44 and an optional comonomer from line 45 through the line 46. An optional cocatalyst can also be introduced into the loop reactor 40.

From the loop reactor 40 the polymer-hydrocarbon mixture is fed through one or several exhaust valves 47 described in, e.g., FI Patent Nos. 971368 or 971367. There is a direct product transfer 67 from the loop reactor 40 to gas phase reactor 60.

In the lower part of the gas phase reactor 60 there is a fluid bed consisting of polymer particles, which will be kept in a fluidized state in an ordinary way by circulating the gases removed from the top of the reactor 60 though line 61, compressor 62 and a heat exchanger (not presented) to the lower part of the reactor 60 in an ordinary way. The reactor 60 is advantageously, but not necessarily, equipped with a mixer (described in WO 95/01831, not shown in the figure). To the lower part of the reactor 60 can be led in a well known way monomers from line 63, optionally comonomer from line 64 and hydrogen from the line 65. The product will be removed from the reactor 60 continually or periodically through the transfer line 66 to the flash tank 68. The overhead product of the recovery system is circulated to the gas phase reactor via a monomer recovery system.

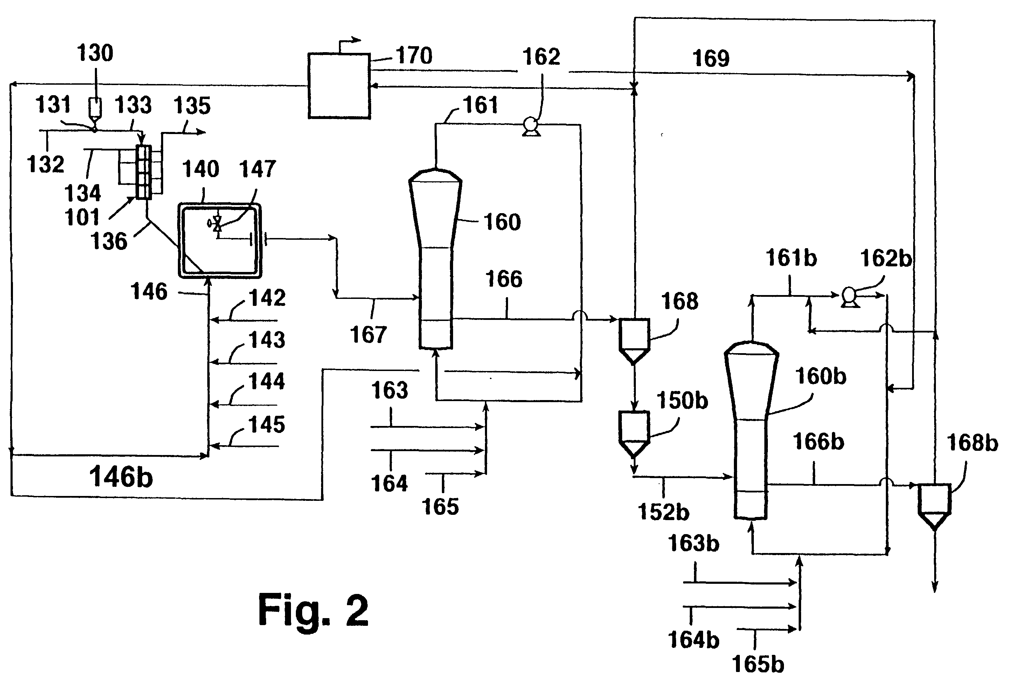

The embodiment shown in Figure 2 differs from the one in Figure 1 only in the sense that product from gas phase reactor 160 is fed into the additional gas phase reactor 160b. The polymer particles are removed from the flash tank 168 and the polymer feed tank 150b through the removing line 152b to the gas phase reactor 160b. The gas phase reactor is advantageously equipped with a mixer (not shown).

The overhead of the flash separator 168b is recycled partly to the gas phase reactor 160b and partly to the monomer recovery system.

In both of the above presented embodiments, the numerals 70 and 170 signify separation means, such as membrane unit or stripping columns, which are capable of freeing the recycle monomer of the gas phase reactor(s) (60, 160 and 160b) or of the separators (68, 168 and 168b) from hydrogen and/or light inert hydrocarbons typically having a lower boiling point than the monomer(s).

### The polymers

The preferred products produced according to the present invention are impact modified propylene polymers preferably containing a rubbery copolymer, in particular, an ethylenepropylene copolymer, improving the impact resistance of the product. The proportion of the elastomer is about 5 to 40 % by weight of the polypropylene.

The following non-limiting examples will illustrate the principles of the present invention.

### Example 1

A production scale plant was simulated to produce continuously PP-homopolymer. The plant comprises catalyst, alkyl, donor, propylene feed systems, a prepolymerization reactor, a loop reactor and a fluidized bed gas phase reactor (GPR).

Catalyst, alkyl, donor and propylene were fed to the prepolymerization reactor. The polymer slurry from the prepolymerization reactor was fed to the loop reactor to which also hydrogen and more propylene was fed. The polymer slurry from the loop reactor and additional hydrogen and propylene was fed to the GPR. The production in the reactors were 300 kg/h in prepolymerization, 15 t/h in loop and 10 t/h in the GPR.

The prepolymerization loop reactor was operated at a pressure of 56 bar and a temperature of 20 °C. The loop reactor was operated at a pressure of 55 bar and a temperature of 85 °C. The MFR (2.16 kg, 230 °C) of the PP-homopolymer produced in the loop was adjusted to 1 via the hydrogen feed.

The GPR was operated at a pressure of 35 bar and a temperature of 85 °C. The MFR (2.16 kg, 230 °C) of the PP-homopolymer taken out of the GPR was adjusted to 13 by controlling the partial pressure of hydrogen. 5 t/h of propene was recirculated from the GPR outlet back to the loop reactor. The once-through conversion of propylene was 83 % .

### Example 2

A production scale plant was simulated to produce continuously PP-copolymer with good impact properties. The plant comprises catalyst, alkyl, donor, propylene feed systems, a prepolymerization reactor, a loop reactor and two fluidized bed gas phase reactors.

Catalyst, alkyl, donor and propylene were fed to the prepolymerization reactor. The polymer slurry from the prepolymerization reactor was fed to the loop reactor to which also hydrogen and more propylene was fed. The polymer slurry from the loop reactor and additional hydrogen and propylene was fed to the first GPR. Before entering the second GPR the polymer from the first GPR was depressurized. Ethylene and additional propylene was fed to the second GPR.

The production in the reactors were 300 kg/h in prepolymerization, 15 t/h in loop and 10 t/h in the first GPR and 6 t/h in the second GPR.

The prepolymerization loop reactor was operated at a pressure of 56 bar and a temperature of 20 °C temperature. The loop reactor was operated at a pressure of 55 bar and a temperature of 85 °C. The MFR (2.16 kg, 230 °C) of the PP-homopolymer produced in the loop was adjusted to 20 via the hydrogen feed.

The first GPR was operated at a pressure of 35 bar and a temperature of 85 °C. The MFR (2.16 kg, 230 °C) of the PP-homopolymer taken out of the first GPR was set at 20 by adjusting the partial pressure of hydrogen. 4.3 t/h of propene was recirculated from the GPR outlet back to the loop reactor.

The second GPR was operated at a pressure of 20 bar and a temperature of 70 °C. The MFR (2.16 kg, 230 °C) of the PP-copolymer taken out of the second GPR was adjusted to 13 via the partial pressure of hydrogen. 2.7 t/h of propene was recirculated from the second GPR outlet back to the loop reactor and 1.6 t/h ethylene recirculated to the second GPR

### Example 3

A pilot plant operated continuously was used to produce PP-homopolymer. The plant comprises catalyst, alkyl, donor, propylene feed systems, a prepolymerization reactor, a loop reactor and a fluidized bed gas phase reactor (GPR). Said components are fed to the prepolymerization reactor.

The polymer slurry from the prepolymerization reactor was fed to the loop reactor to which also hydrogen and more propylene was fed. The polymer slurry from the loop reactor and additional hydrogen and propylene was fed to the GPR.

The formed polymer and unreacted propylene where separated after removal from GPR.

The catalyst used was a highly active and stereospecific ZN-catalyst made according to U.S. Patent 5.234.879. The catalyst was contacted with triethylaluminium (TEA) and dicyclopentyldimethoxysilane (DCPDMS) (Al/Ti ratio was 250 and Al/Do 40 (mole)) before feeding to the prepolymerization reactor.

The catalyst was fed according to US Patent No. 5,385,992 and was flushed with propylene to the prepolymerization reactor. The prepolymerization reactor was operated at a pressure of 51 bar, a temperature of 20 °C temperature and mean residence time of the catalyst of 7 min.

The prepolymerized catalyst propylene and other components were transferred to the loop reactor. The loop reactor was operated at a pressure of 50 bar, a temperature of 80 °C temperature and mean residence time of the catalyst of 1 h. The MFR (2.16 kg, 230 °C) of the PP-homopolymer produced in the loop was adjusted to 7 via the hydrogen feed.

The polymer slurry from the loop reactor was transferred to the GPR. The GPR reactor was operated at a total pressure of 29 bar and a 21 bar partial pressure of propylene, a temperature of 90 °C and a mean residence time of the catalyst of 1 h. The MFR (2.16 kg, 230 °C) of the PP-homopolymer taken out of the GPR was set at 7 by adjusting the partial pressure of hydrogen. The production split between the reactors was 1 % in prepolymerization, 49 % in loop and 50 % in GPR. Catalyst productivity was 32 kg PP/g cat.

### Example 4

A pilot plant operated continuously was used to produce PP-homopolymer. The plant comprises catalyst, alkyl, donor, propylene feed systems, a prepolymerization reactor, a loop reactor and a fluidized bed gas phase reactor (GPR). Said components are fed to the prepolymerization reactor.

The polymer slurry from the prepolymerization reactor was fed to the loop reactor to which also hydrogen and more propylene was fed. The polymer slurry from the loop reactor and additional hydrogen and propylene was fed to the GPR.

The formed polymer and unreacted propylene were separated after removal from the GPR.

The catalyst used was a highly active and stereospecific ZN-catalyst made according to WO 98/12622. The catalyst was contacted with triethylaluminium (TEA) and dicyclopentyldimethoxysilane (DCPDMS) (Al/Ti ratio was 250 and Al/Do 40 (mole)) before feeding to the prepolymerization reactor.

The catalyst was fed according to US Patent No. 5,385,992 and was flushed with propylene to the prepolymerization reactor. The prepolymerization reactor was operated at a pressure of 53 bar, a temperature of 20 °C and a mean residence time of the catalyst of 7 min.

The prepolymerized catalyst propylene and other components were transferred to the loop reactor. The loop reactor was operated at a pressure of 52 bar, a temperature of 85 °C and a mean residence time of the catalyst of 1 h. The MFR (2.16 kg, 230 °C) of the PP-homopolymer produced in the loop was set at 7 by adjusting the hydrogen feed.

The polymer slurry from the loop reactor was transferred to the GPR. The GPR reactor was operated at a total pressure of 29 bar and a 21 bar partial pressure of propylene, a 80 °C temperature and mean residence time of the catalyst of 1 h. The MFR (2.16 kg, 230 °C) of the PP-homopolymer taken out of the GPR was adjusted to 7 via the partial pressure of hydrogen. The production split between the reactors was 1 % in prepolymerization, 53 % in loop and 48 % in GPR. Catalyst productivity was 50 kg PP/g cat.

### Example 5

A pilot plant operated continuously was used to produce PP-homopolymer. The plant comprises catalyst, alkyl, donor, propylene feed systems, a prepolymerization reactor, a loop reactor and a fluidized bed gas phase reactor (GPR). Said components are fed to the prepolymerization reactor.

The polymer slurry from the prepolymerization reactor was fed to a loop reactor in which also hydrogen and more propylene was fed. The polymer slurry from the loop reactor and additional hydrogen and propylene was fed to the GPR.

The formed polymer and unreacted propylene where separated after removal from the GPR.

The catalyst used was a highly active and stereospecific ZN-catalyst made according to U.S. Patent No. 5,234,879. The catalyst was contacted with triethylaluminium (TEA) and dicyclopentyldimethoxysilane (DCPDMS) (Al/Ti ratio was 250 and Al/Do 40 (mole)) before feeding to the prepolymerization reactor.

The catalyst was fed according to US Patent 5,385,992 and was flushed with propylene to the prepolymerization reactor. The prepolymerization reactor was operated at a pressure of 58 bar pressure, a temperature of 20 °C and a mean residence time of the catalyst of 7 min.

The prepolymerized catalyst propylene and other components were transferred to the loop reactor. The loop reactor was operated at a pressure of 57 bar, a temperature of 80 °C temperature and a mean residence time of the catalyst amounting to 2 h. The MFR (2.16 kg, 230 °C) of the PP-homopolymer produced in the loop was set at 375 by adjusting the hydrogen feed.

The polymer slurry from the loop reactor was transferred to the GPR. The GPR reactor was operated at a total pressure of 29 bar and a 16 bar partial pressure of propylene, a temperature of 80 °C and a mean residence time of the catalyst of 2 h. The MFR (2.16 kg, 230 °C) of the PP-homopolymer taken out of the GPR was set at 450 by adjusting the partial pressure of hydrogen and controlling the production split between the reactors. Production split was adjusted to be 1 % in prepolymerization, 50 % in loop and 49 % in GPR.

## Claims

1. A process for preparing propylene polymers, which comprises the steps of
- polymerizing propylene optionally with comonomers in the presence of a catalyst at an elevated temperature of at least 80 °C and at a pressure of 30 to 100 bar in at least one loop reactor and at least one gas phase reactor, wherein the production rate of the loop reactor is 10 to <50 wt-% of the total production rate of the loop and the first gas phase reactor,
- recovering from the loop reactor a polymerization product containing unreacted monomers and
- conducting the polymerization product to a first gas phase reactor without recycling of the unreacted monomers to the loop reactor before the gas phase reactor.

2. The process according to claim 1, wherein the polymerization product of the loop reactor comprises polymeric substances selected from the group consisting of polypropylene, and mixtures of propylene and propylene-ethylene copolymers.

3. The process according to claim 1 or 2, wherein the comonomer is selected from the group of C₂ to C₁₆ olefins.

4. The process according to claim 3, wherein the comonomer is selected from the group of ethylene, 1-butene, 4-methyl-1-pentene, 3-methyl-1-butene, 1-hexene, 1-octene, 1-decene, dienes, vinylcyclohexane and cyclopentene.

5. The process according to any of the preceding claims, wherein the concentration of propylene and the comonomer in the reaction medium is maintained in excess of 60 wt-% for forming a product in particulate form.

6. The process according to any of the preceding claims, wherein polymerization in the loop reactor is carried out in a reaction medium at a temperature in the range of 80 °C to the critical temperature of the reaction medium.

7. The process according to any of claims 1 to 5, wherein the polymerization in the loop reactor is carried out at a temperature higher than the critical temperature of the reaction medium and below the softening temperature of the polymer.

8. The process according to any of claims 1 to 7, wherein the loop reactor is operated at a pressure in the range of 45 to 100 bar.

9. The process according to any of claims 1 to 8, wherein the catalyst is selected from the group consisting of Ziegler-Natta catalysts and metallocene catalysts.

10. The process according to any of the preceding claims, wherein the reaction medium of the polymerization product is evaporated before the polymerization product is fed into a first gas phase reactor.

11. The process according to claim 10, wherein the polymerization product is conducted from the loop reactor to the first gas phase reactor via a jacketed pipe line heated with steam for providing at least a part of the energy needed for evaporation of the reaction medium.

12. The process according to any of claims 1 to 11, wherein polymerization in the first gas phase reactor is carried out without additional monomer feed.

13. The process according to any one of the preceding claims, wherein a polymerization product is recovered from the gas phase reactor.

14. The process according to claim 13, wherein the polymerization product is subjected to copolymerization in the presence of comonomers to provide a modified polymer product with improved impact properties.

15. The process according to claim 14, wherein the copolymerization is carried out in a second gas phase reactor arranged in series with the first gas phase reactor.

16. The process according to claim 14 or 15, wherein the modified polymer product is subjected to a least one further copolymerization reaction in at least one further reactor.

17. The process according to any of the preceding claims, wherein at least part of the unreacted monomers are recovered from the second and/or third gas phase reactor and recycled back to the previous gas phase reactor(s).

18. The process according to any of the preceding claims, wherein the unreacted monomers recovered from the first gas phase reactor are recycled back to the gas phase reactor.

19. The process according to any of the preceding claims, wherein hydrogen is used in at least one reactor as a molar mass modifier.

20. The process according to any of the preceding claims, wherein the catalyst used is prepolymerized before feeding it into the process.

21. A process for preparing propylene homopolymers, which comprises the steps of
- subjecting propylene to polymerization in the presence of a catalyst at a temperature of at least 80°C and at a pressure of 30 to 100 bar in at least one loop reactor to produce a first polymerization product comprising a propylene homopolymer and unreacted monomers,
- recovering the homopolymer and the unreacted monomers,
- feeding the homopolymer to at least one gas phase reactor,
- feeding all of the unreacted monomers to said gas phase reactor,
- subjecting the homopolymer and the unreacted monomers to polymerization in said gas phase reactor to produce a second homopolymerization product containing propylene polymer and gaseous substances, and
- recovering the propylene homopolymer,
wherein the production rate of the loop reactor is 10 to <50 wt-% of the total production rate of the loop and the first gas phase reactor.

22. The process according to claim 21, wherein the propylene polymer is separated from the gaseous reaction medium and fed to a further gas phase reactor for copolymerization.

23. The process according to claim 21 or claim 22, wherein hydrogen is used as molar mass modifier in at least one of the reactors.

24. The process according to any of claims 21 to 23, wherein the polymerization in said gas phase reactor is carried out essentially without additional feed of monomers.

25. An apparatus for preparing impact modified propylene polymers, which comprises
- at least one loop reactor and a first gas phase reactor and a second gas phase reactor, connected in series to form a cascade,
- a first conduit interconnecting at least one loop reactor with at least one gas phase reactor for directly conducting all of the unreacted monomers from the loop reactor to the gas phase reactor,
- a second conduit interconnecting said first and said second gas phase reactors,
- means connected to said loop reactor for feeding propylene to said loop reactor, and
- means connected to said second gas phase reactor for feeding comonomer to said reactor.

26. The apparatus according to claim 25, wherein the first conduit comprises a jacketed pipe line provided with means for heating it with steam.

27. The apparatus according to claim 25 or claim 26, wherein the second conduit is connected to means for separating polymer from reaction medium.

28. The apparatus according to claim 27, wherein the means comprises a flash tank.

## Patentansprüche

1. Verfahren zur Herstellung von Propylenpolymeren, das die Stufen aufweist:
- Polymerisieren von Propylen wahlweise mit Comonomeren in Gegenwart eines Katalysators bei einer erhöhten Temperatur von mindestens 80°C und bei einem Druck von 30 - 100 bar in mindestens einem Schleifenreaktor und mindestens einem Gasphasenreaktor, wobei die Produktionsrate des Schleifenreaktors 10 bis <50 Gew-% der gesamten Produktionsrate des Schleifenreaktors und des ersten Gasphasenreaktors beträgt,
- Gewinnen eines Polymerisatiorisprodukts, das nicht umgesetzte Monomere enthält, aus dem Schleifenreaktor und
- Zuführen des Reaktionsprodukts zu einem ersten Gasphasenreaktor ohne Rückführen der nicht umgesetzten Monomere in den Schleifenreaktor vor dem Gasphasenreaktor.

2. Verfahren nach Anspruch 1, worin das Polymerisationsprodukt des Schleifenreaktors polymere Substanzen umfasst, die aus der Gruppe gewählt sind, die aus Polypropylen und Mischungen aus Propylen und Propylen/Ethylen-Copolymeren besteht.

3. Verfahren nach Anspruch 1 oder 2, worin das Comonomer aus der Gruppe C₂ - C₁₆-Olefinen gewählt wird.

4. Verfahren nach Anspruch 3, worin das Comonomer aus der Gruppe gewählt ist, die aus Ethylen, 1-Buten, 4-Methyl-1-penten, 3-Methyl-1-buten, 1-Hexen, 1-Octen, 1-Decen, Dienen, Vinylcyclohexan und Cyclopenten besteht.

5. Verfahren nach einem der vorangegangenen Ansprüche, worin die Konzentration des Propylens und des Comonomers im Reaktionsmedium im Überschuss von 60 Gew-% zur Bildung eines Produkts in Teilchenform gehalten wird.

6. Verfahren nach einem der vorangegangenen Ansprüche, worin die Polymerisation im Schleifenreaktor in einem Reaktionsmedium bei einer Temperatur im Bereich von 80°C bis zur kritischen Temperatur des Reaktionsmediums durchgeführt wird.

7. Verfahren nach einem der Ansprüche 1 bis 5, worin die Polymerisation im Schleifenreaktor bei einer Temperatur durchgeführt wird, die höher als die kritische Temperatur des Reaktionsmediums ist und unterhalb der Erweichungstemperatur des Polymers liegt.

8. Verfahren nach einem der Ansprüche 1 bis 7, worin der Schleifenreaktor bei einem Druck im Bereich von 45 bis 100 bar betrieben wird.

9. Verfahren nach einem der Ansprüche 1 bis 8, worin der Katalysator aus der Gruppe gewählt wird, die aus Ziegler-Natta-Katalysatoren und Metallocenkatalysatoren besteht.

10. Verfahren nach einem der vorangegangenen Ansprüche, worin das Reaktionsmedium des Polymerisationsprodukts verdampft wird, bevor das Polymerisationsprodukt in einen ersten Gasphasenreaktor eingeführt wird.

11. Verfahren nach Anspruch 10, worin das Polymerisationsprodukt aus dem Schleifenreaktor in einen ersten Gasphasenreaktor über eine Mantelleitung, die mit Dampf erhitzt wird, um mindestens einen Teil der Energie, die für die Verdampfung des Reaktionsmediums benötigt wird, zur Verfügung zu stellen, geführt wird.

12. Verfahren nach einem der Ansprüche 1 bis 11, worin die Polymerisation im ersten Gasphasenreaktor ohne weitere Monomermaterialzugabe durchgeführt wird.

13. Verfahren nach einem der vorangegangenen Ansprüche, worin ein Polymerisationsprodukt aus dem Gasphasenreaktor gewonnen wird.

14. Verfahren nach Anspruch 13, worin das Polymerisationsprodukt einer Copolymerisation in Gegenwart von Comonomeren unterworfen wird, um ein modifiziertes Polymerprodukt mit verbesserten Schlageigenschaften zur Verfügung zu stellen.

15. Verfahren nach Anspruch 14, worin die Copolymerisation in einem zweiten Gasphasenreaktor, der in Serie mit dem ersten Gasphasenreaktor angeordnet ist, durchgeführt wird.

16. Verfahren nach Anspruch 14 oder 15, worin das.modifizierte Polymerprodukt mindestens einer weiteren Copolymerisationsreaktion in mindestens einem weiteren Reaktor unterworfen wird.

17. Verfahren nach einem der vorangegangenen Ansprüche, worin mindestens ein Teil der nicht umgesetzten Monomere aus dem zweiten und/oder dritten Gasphasenreaktor gewonnen wird und in den (die) vorherigen Gasphasenreaktor(en) zurückgeführt wird.

18. Verfahren nach einem der vorangegangenen Ansprüche, worin die aus dem ersten Gasphasenreaktor gewonnenen, nicht umgesetzten Monomere in den Gasphasenreaktor zurückgeführt werden.

19. Verfahren nach einem der vorangegangenen Ansprüche, worin Wasserstoff in mindestens einem Reaktor als Molmassenmodifikator verwendet wird.

20. Verfahren nach einem der vorangegangenen Ansprüche, worin der verwendete Katalysator vorpolymerisiert wird, bevor er in das Verfahren eingeführt wird.

21. Verfahren zur Herstellung von Propylenhomopolymeren, das die Stufen aufweist:
- Polymerisieren von Propylen in Gegenwart eines Katalysators bei einer Temperatur von mindestens 80°C und bei einem Druck von 30 - 100 bar in mindestens einem Schleifenreaktor, um ein erstes Polymerisationsprodukt, das ein Propylenhomopolymer und nicht umgesetzte Monomere umfasst, herzustellen,
- Gewinnen des Homopolymers und der nicht umgesetzten Monomere,
- Zuführen des Homopolymers in mindestens einen Gasphasenreaktor,
- Zuführen aller nicht umgesetzter Monomere in den Gasphasenreaktor,
- Polymerisieren des Homopolymers und der nicht umgesetzten Monomere in dem Gasphasenreaktor, um ein zweites Homopolymerisationsprodukt, das ein Propylenpolymer und gasförmige Substanzen enthält, herzustellen, und
- Gewinnen des Propylenhomopolymers,
wobei die Produktionsrate des Schleifenreaktors 10 bis <50 Gew-% der gesamten Produktionsrate des Schleifenreaktors und des ersten Gasphasenreaktors beträgt.

22. Verfahren nach Anspruch 21, worin das Propylenpolymer aus dem gasförmigen Reaktionsmedium abgetrennt wird und für die Copolymerisation in einen weiteren Gasphasenreaktor eingegeben wird.

23. Verfahren nach Anspruch 21 oder 22, worin Wasserstoff als Molmassenmodifikator in mindestens einem der Reaktoren verwendet wird.

24. Verfahren nach einem der Ansprüche 21 bis 23, worin die Polymerisation in dem Gasphasenreaktor im wesentlichen ohne weitere Materialzugabe von Monomeren durchgeführt wird.

25. Vorrichtung zur Herstellung von schlagmodifizierten Propylenpolymeren, die aufweist:
- mindestens einen Schleifenreaktor und einen ersten Gasphasenreaktor und einen zweiten Gasphasenreaktor, die in Serie unter Bildung einer Kaskade verbunden sind,
- eine erste Leitung, die mindestens einen Schleifenreaktor mit mindestens einem Gasphasenreaktor verbindet, um direkt alle nicht umgesetzten Monomere aus dem Schleifenreaktor in den Gasphasenreaktor zu führen,
- eine zweite Leitung, die den ersten und den zweiten Gasphasenreaktor verbindet,
- ein Mittel, das mit dem Schleifenreaktor verbunden ist, um Propylen in den Schleifenreaktor zu führen, und
- ein Mittel, das mit dem zweiten Gasphasenreaktor verbunden ist, um das Comonomer in den Reaktor einzuführen.

26. Vorrichtung nach Anspruch 25, worin die erste Leitung eine Mantelleitung umfasst, die ein Mittel aufweist, um diese mit Dampf zu erhitzen.

27. Verfahren nach Anspruch 25 oder Anspruch 26, worin die zweite Leitung mit einem Mittel verbunden ist, um das Polymer aus dem Reaktionsmedium abzutrennen.

28. Vorrichtung nach Anspruch 27, worin das Mittel einen Kondensatsammler umfasst.

## Revendications

1. Procédé de préparation de polymères de propylène, qui comprend les étapes consistant à :
- polymériser du propylène éventuellement avec des co-monomères en présence d'un catalyseur à une température élevée d'au moins 80°C et à une pression de 30 à 100 bars dans au moins un réacteur en boucle et dans au moins un réacteur en phase gazeuse, dans lequel le taux de production du réacteur en boucle est de 10 % à <50 % en poids du taux de production totale du réacteur en boucle et du premier réacteur en phase gazeuse,
- récupérer à partir du réacteur en boucle, un produit de polymérisation contenant des monomères qui n'ont pas réagi et
- conduire le produit de polymérisation à un premier réacteur en phase gazeuse sans recyclage des monomères qui n'ont pas réagi vers le réacteur en boucle avant le réacteur en phase gazeuse.

2. Procédé selon la revendication 1, dans lequel le produit de polymérisation du réacteur en boucle comprend des substances polymériques choisies parmi le groupe consistant en le polypropylène, et les mélanges de polypropylène et de copolymères de propylène et d'éthylène.

3. Procédé selon la revendication 1 ou 2, dans lequel le co-monomère est choisi parmi le groupe des oléfines en C2 à C16.

4. Procédé selon la revendication 3, dans lequel le co-monomère est choisi parmi le groupe de l'éthylène, du 1-butène, du 4-méthyl-1-pentène, du 3-méthyl-1-butène, du 1-hexène, du 1-octène, du 1-décène, des diènes, du vinylcyclohexane et du cyclopentène.

5. Procédé selon l'une quelconque des revendications précédentes, dans lequel la concentration de propylène et du co-monomère dans le milieu réactionnel est maintenue dans un excès de 60 % en poids pour former un produit sous forme de particulaire.

6. Procédé selon l'une quelconque des revendications précédentes, dans lequel la polymérisation dans le réacteur en boucle est effectuée dans un milieu réactionnel à une température dans la plage de 80°C de la température critique du milieu réactionnel.

7. Procédé selon l'une quelconque des revendications 1 à 5, dans lequel la polymérisation dans le réacteur en boucle est effectuée à une température supérieure à la température critique du milieu réactionnel et en dessous de la température de ramollissement du polymère.

8. Procédé selon l'une quelconque des revendications 1 à 7, dans lequel le réacteur en boucle fonctionne à une pression dans la plage de 45 à 100 bars.

9. Procédé selon l'une quelconque des revendications 1 à 8, dans lequel le catalyseur est choisi parmi le groupe constitué des catalyseurs de Ziegler-Natta et des catalyseurs métallocènes.

10. Procédé selon l'une quelconque des revendications précédentes dans lequel, le milieu réactionnel du produit de polymérisation est évaporé avant que le produit de polymérisation soit chargé dans le premier réacteur à phase gazeuse.

11. Procédé selon la revendication 10, dans lequel le produit de polymérisation est conduit à partir du réacteur en boucle vers le premier réacteur en phase gazeuse via un tuyau chemisé chauffé avec de la vapeur pour fournir au moins une partie de l'énergie nécessaire à l'évaporation du milieu réactionnel.

12. Procédé selon l'une quelconque des revendications 1 à 11, dans lequel la polymérisation dans le premier réacteur en phase gazeuse est effectuée sans alimentation en monomère supplémentaire.

13. Procédé selon l'une quelconque des revendications précédentes, dans lequel un produit de polymérisation est récupéré à partir du réacteur en phase gazeuse.

14. Procédé selon la revendication 13, dans lequel le produit de polymérisation est soumis à une copolymérisation en présence de comonomères afin de fournir un produit polymère modifié avec une amélioration des propriétés d'impact.

15. Procédé selon la revendication 14, dans lequel la copolymérisation est effectuée dans un second réacteur en phase gazeuse disposé en série avec le premier réacteur en phase gazeuse.

16. Procédé selon la revendication 14 ou 15, dans lequel le produit polymère modifié est soumis à au moins une autre réaction de copolymérisation dans au moins un autre réacteur.

17. Procédé selon l'une quelconque des revendications précédentes, dans lequel au moins une partie des monomères qui n'ont pas réagi est récupérée à partir du deuxième et/ou du troisième réacteur en phase gazeuse et recyclée vers le(s) réacteur(s) en phase gazeuse précédent(s).

18. Procédé selon l'une quelconque des revendications précédentes, dans lequel les monomères qui n'ont pas réagi, récupérés à partir du premier réacteur en phase gazeuse, sont recyclés vers le réacteur en phase gazeuse.

19. Procédé selon l'une quelconque des revendications précédentes, dans lequel de l'hydrogène est utilisé dans au moins un réacteur en tant que modificateur de la masse molaire.

20. Procédé selon l'une quelconque des revendications précédentes, dans lequel le catalyseur utilisé est prépolymérisé avant son chargement dans le procédé.

21. Procédé de préparation d'homopolymères de propylène, qui comprend les étapes consistant à :
- soumettre du propylène à une polymérisation en présence d'un catalyseur à une température d'au moins 80°C et une pression de 30 à 100 bars dans au moins un réacteur en boucle afin de produire un premier produit de polymérisation comprenant un homopolymère de propylène et des monomères qui n'ont pas réagi,
- récupérer l'homopolymère et les monomères qui n'ont pas réagi,
- charger l'homopolymère dans au moins un réacteur à phase gazeuse,
- charger tous les monomères qui n'ont pas réagi dans ledit réacteur en phase gazeuse,
- soumettre l'homopolymère et les monomères qui n'ont pas réagi à une polymérisation dans ledit réacteur en phase gazeuse pour produire un second produit d'homopolymérisation contenant un polymère de propylène et des substances gazeuses, et
- récupérer l'homopolymère de propylène, dans lequel le taux de production du réacteur en boucle est de 10 % à <50 % en poids du taux de production totale du réacteur en boucle et du premier réacteur à phase gazeuse.

22. Procédé selon la revendication 21, dans lequel le polymère de propylène est séparé du milieu réactionnel gazeux et est chargé dans un réacteur en phase gazeuse supplémentaire pour une copolymérisation.

23. Procédé selon la revendication 21 ou 22, dans lequel de l'hydrogène est utilisé comme modificateur de la masse molaire dans au moins un des réacteurs.

24. Procédé selon l'une quelconque des revendications 21 à 23, dans lequel la polymérisation dans ledit réacteur en phase gazeuse est effectuée essentiellement sans chargement supplémentaire de monomères.

25. Un appareil pour préparer des polymères de propylène modifiés résistant aux chocs, qui comprend
- au moins un réacteur en boucle et un premier réacteur en phase gazeuse et un second réacteur en phase gazeuse, connectés en série pour former une cascade,
- un premier conduit connectant au moins un réacteur en boucle avec au moins un réacteur en phase gazeuse pour conduire directement tous les monomères qui n'ont pas réagi à partir du réacteur en boucle vers le réacteur en phase gazeuse,
- un second conduit connectant ledit premier et ledit second réacteur en phase gazeuse,
- un moyen connecté audit réacteur en boucle pour alimenter en propylène ledit réacteur en boucle,
- un moyen connecté audit second réacteur en phase gazeuse pour alimenter en co-monomère ledit réacteur.

26. Appareil selon la revendication 25, dans lequel le premier conduit comprend un tuyau chemisé avec un moyen pour le chauffer avec de la vapeur.

27. Appareil selon la revendication 25 ou 26, dans lequel le second conduit est connecté à des moyens pour séparer le polymère à partir du milieu réactionnel.

28. Appareil selon la revendication 27, dans lequel le moyen comprend un réservoir de décompression.
